# EUROPÄISCHE PATENTANMELDUNG

(11) **EP 2 511 076 A1**
(43) Veröffentlichungstag der Anmeldung: **17.10.2012**
(21) Anmeldenummer: 12163526.2
(22) Anmeldetag: 10.04.2012
(51) Int. Cl.: B29C 70/08, B29C 70/10, B32B 5/26, B32B 5/28, C08G 69/18, C08J 9/00, C08J 9/06

(54) **Verfahren zur Herstellung eines Polyamids durch anionische Polymerisation**

(30) Priorität: 11.04.2011 DE 102011007134
(71) Anmelder: BASF SE, 67056 Ludwigshafen (DE)
(72) Erfinder: Scherzer, Dietrich, 67433 Neustadt (DE); Desbois, Philippe, 68535 Edingen-Neckarhausen (DE)

(57) **Zusammenfassung**

Die vorliegende Erfindung betrifft ein Verfahren zur Herstellung eines Polyamids durch anionische Polymerisation.

Unter anderem betrifft die vorliegende Erfindung ein Verfahren zum Verschäumen von Polyamiden, insbesondere Polyamid 6, die Herstellung von schäumfähigen Polyamid-Halbzeugen und Formteilen, von geschäumten Polyamid-Formteilen sowie ihre Verwendung.

Außerdem betrifft die Erfindung Verfahren zur Herstellung von faserverstärkten Sandwichelementen aus Polyamid 6, sowie ihre Verwendung.

## Beschreibung

Die vorliegende Erfindung betrifft ein Verfahren zur Herstellung eines Polyamids durch anionische Polymerisation.

Unter anderem betrifft die Erfindung ein Verfahren zum Verschäumen von Polyamiden, insbesondere Polyamid 6, die Herstellung von schäumfähigen Polyamid-Halbzeugen und Formteilen, von geschäumten Polyamid-Formteilen sowie ihre Verwendung.

Außerdem betrifft die Erfindung Verfahren zur Herstellung von faserverstärkten Sandwichelementen aus Polyamid 6, sowie ihre Verwendung.

Die Herstellung geschäumter Formteile aus anionisch polymerisiertem Polyamid ist grundsätzlich aus DE 10 2009 021209 bekannt. Die Herstellung faserverstärkter Formteile ist aus der Patentanmeldung EP 11156759.0 bekannt.

Es ist ein Problem, teilkristalline Thermoplaste wie Polyamide zu verschäumen. Die Verwendung chemischer Treibmittel in Thermoplasten ist schwierig, weil sich die Treibmittel nicht unzersetzt durch einfaches Compoundieren in die Thermoplaste einarbeiten lassen, da die Compoundier-Temperaturen ähnlich hoch wie die folgenden Verarbeitungstemperaturen der Thermoplaste, beispielsweise die Spritzgießtemperaturen, sind. Dadurch käme es zu unerwünschter Zersetzung (Aufschäumen) des Treibmittels während des Kompoundiervorgangs.

Aufgabe der vorliegenden Erfindung war es daher, die unerwünschte Zersetzung des Treibmittels während der Einarbeitung möglichst zu vermeiden und ein einfach durchzuführendes Verfahren zur Herstellung von Polyamid bereitzustellen.

Es sollte dabei aufgeschäumtes und/oder schäumbares Polyamid erhalten werden, welches wiederum zur Herstellung von geschäumten und/oder schäumbaren Formteilen verwendet werden kann.

Weiterhin war es eine Aufgabe der vorliegenden Erfindung, ein einfach durchzuführendes Verfahren zur Herstellung von faserverstärktem Polyamid bereitzustellen, wobei wiederum die oben genannten Probleme vermieden werden sollten. Das faserverstärkte Polyamid sollte zur Herstellung von geschäumten und/oder schäumbaren Formteilen geeignet sein.

Weiterhin sollte eine Verringerung der Dichte des hergestellten Polyamids, bzw. eine Verringerung des Gewichts eines aus dem Polyamid erhältlichen, ggf. faserverstärkten, Formteils bei ungefähr gleichen (oder besseren) mechanischen Eigenschaften angestrebt werden.

Die erwähnte Aufgabe konnte nun überraschenderweise durch ein Verfahren wie in den Ansprüchen definiert gelöst werden.

Der Gegenstand der vorliegenden Erfindung ist also ein Verfahren zur Herstellung eines Polyamids durch anionische Polymerisation mindestens eines Lactams, wobei in das mindestens eine geschmolzene Lactam ein oder mehrere chemische Treibmittel, wahlweise zusammen mit mindestens einem weiteren Additiv, eingearbeitet werden, und dann das mindestens eine Lactam anionisch polymerisiert wird, wobei die Polymerisationstemperatur unter dem Schmelzpunkt des entstehenden Polyamids liegt, und wobei das entstehende Polyamid mit Fasern verstärkt ist, und wobei während der anionischen Polymerisation des mindestens einen Lactams Fasern und/oder textile Strukturen vorhanden sind.

Mindestens eines der Lactame ist dabei bevorzugt ausgewählt aus der Gruppe enthaltend Caprolactam und Lauryllactam.

In einer bevorzugten Ausführungsform der Erfindung liegt die Polymerisationstemperatur über der jeweiligen Zersetzungstemperatur jedes der eingesetzten chemischen Treibmittel.
In dieser Ausführungsform werden die Additive in der Regel bei Temperaturen < 140°C, bevorzugt <120°C und besonders bevorzugt < 100°C eingearbeitet, wobei die anschließende Polymerisation mit dem Aufschäumen in der Regel bei Temperaturen > 140°C, bevorzugt > 150°C und besonders bevorzugt > 160°C stattfindet.

Dabei ist das entstehende Polyamid bevorzugt ein Schaum.

Weitere Gegenstände der Erfindung sind auch ein geschäumtes Polyamid, herstellbar nach dem erfindungsgemäßen Verfahren, sowie die Verwendung des nach dem erfindungsgemäßen Verfahren herstellbaren geschäumten Polyamids als Halbzeug zur Herstellung geschäumter oder schäumbarer Formteile.

In einer weiteren bevorzugten Ausführungsform der Erfindung liegt die Polymerisationstemperatur unter der jeweiligen Zersetzungstemperatur jedes der eingesetzten chemischen Treibmittel. In dieser Ausführungsform werden die Additive in der Regel bei Temperaturen < 140°C, bevorzugt <120°C und besonders bevorzugt < 100°C eingearbeitet, wobei die anschließende Polymerisation in der Regel bei Temperaturen zwischen 130°C und 170°C, bevorzugt zwischen 140°C und 160°C besonders bevorzugt zwischen 145°C und 155°C stattfindet.

Weitere Gegenstände der Erfindung sind daher auch ein schäumbares Polyamid und die Verwendung des erfindungsgemäß herstellbaren schäumbaren Polyamids zur Herstellung geschäumter oder schäumbarer Formteile.

In der Regel werden hierbei die hergestellten Formteile bei Temperaturen oberhalb des Schmelzpunktes des Polyamids, bevorzugt oberhalb von 250°C aufgeschäumt.

Ein weiterer Gegenstand der vorliegenden Erfindung ist somit auch ein Verfahren zur Herstellung faserverstärkter Formteile, wobei die erfindungsgemäß herstellbaren faserverstärkten Polyamide bei Temperaturen oberhalb ihres Schmelzpunkts weiter verarbeitet werden.

Bevorzugt weist dabei die Faserverstärkung eine Sandwichstruktur auf, und im Inneren des Formteils werden weniger dichte Faserstrukturen als im Außenbereich des Formteils verwendet.

Auch erfindungsgemäß herstellbare faserverstärkte geschäumte Formteile sind daher ebenfalls ein Gegenstand dieser Erfindung, wobei deren Faserstruktur bevorzugt einen Dichtegradienten aufweist und in deren Kern sich weniger dicht gepackte Faserstrukturen befinden.

Ein weiterer Gegenstand der vorliegenden Erfindung ist auch die Verwendung der erfindungsgemäß herstellbaren faserverstärkten Polyamide zur Herstellung von geschäumten sandwichartigen faserverstärkten Bauteilen.

Die chemischen Treibmittel für das erfindungsgemäße Verfahren werden bevorzugt ausgewählt aus der Gruppe enthaltend Natriumhydrogencarbonat, Zitronensäure, Zitronensäurederivate, Abmischungen von Hydrogencarbonaten mit Zitronensäure und/oder Zitronensäurederivaten, Azodicarbonamid, p-Toluolsulfonylhydrazid, Nitrosoverbindungen, Hydrazide , 4,4-Oxybisbenzylsulfonylhydrazid und 5-Phenyltetrazol.

Die Zersetzungstemperatur der einzelnen Treibmittel variiert und ist für die wichtigsten zusammen mit dem Treibgas tabellarisch angegeben.

| | Zersetzung | Gastyp |
|---|---|---|
| | (°C) | |
| 5-Phenyltetrazol | 240-250 | N2 |
| Azodicarbonamid | 200-230 | N2, (NH3, CO2) |
| Natriumhydrogencarbonat, | 150-230 | CO2, H2O |
| Hydrogencarbonate mit Zitronensäure | 150-230 | CO2, H2O |
| 4,4-Oxybisbenzylsulfonylhydrazid | 140-165 | N2, CO2, H2O |
| | | |
| Toluolsulfonylhydrazid | 110-140 | N2, H2O |

Alternativ können statt chemischer Treibmittel auch physikalische Treibmittel verwendet werden, wie z. B. Toluol oder Ethylbenzol. In diesem Falle wird das Merkmal der Zersetzungstemperatur eines chemischen Treibmittels durch die Siedetemperatur des jeweiligen physikalischen Treibmittels ersetzt.

Das bedeutet beispielsweise, dass in einer Ausführungsform der Erfindung die Polymerisationstemperatur unter der jeweiligen Siedetemperatur jedes der eingesetzten physikalischen Treibmittel liegt.

Bevorzugt werden erfindungsgemäß chemische Treibmittel verwendet, da bei diesen - im Gegensatz zu physikalischen Treibmitteln wie Toluol, die bei normalen Arbeitsbedingungen langsam verdampfen - keine explosionsgeschützten Einrichtungen bei der Verarbeitung bzw. Verwendung benötigt werden. Zudem müssen chemische Treibmittel, anders als die meisten physikalischen Treibmittel, nicht im Abzug verwendet werden, so dass der Schutz der Beschäftigten vor gesundheitsgefährdenden Einwirkungen durch die bei der Verwendung toxikologisch unbedenklichen chemischen Treibmittel besser gewährleistet ist und teure Schutzmaßnahmen, wie bspw. Abzüge, weitgehend überflüssig sind.

Die Additive für das erfindungsgemäße Verfahren werden beispielsweise ausgewählt aus der Gruppe enthaltend Hydrogencarbonate mit Zitronensäure und 5-Phenyltetrazol, sowie Katalysatoren und Aktivatoren für die anionische Lactampolymerisation.

Die Fasern und/oder textilen Strukturen für das erfindungsgemäße Verfahren werden bevorzugt ausgewählt aus der Gruppe enthaltend Kohlenstoff- oder Glasfaser-Gelege, kombiniert mit Vliesen als Kernmaterial.

Nachfolgend wird eine bevorzugte Ausführungsform beschrieben:
In das aufgeschmolzene Caprolactam werden bei Temperaturen unterhalb 100°C die chemischen Treibmittel und andere Additive wie Katalysatoren und Aktivatoren gegeben. Anschließen wird die Caprolactamschmelze in ein Werkzeug eingebracht, das die textilen Strukturen enthält und dort bei Temperaturen, die zum Aufschäumen (Zersetzung des Treibmittels) führen, auspolymerisiert. Das Werkzeug enthält textile Strukturen in Form von Geweben oder Gelegen aus mineralischen Fasern, Kohlenstofffasern oder ähnlichem enthalten. Als Treibmittel werden bevorzugt Treibmittel verwendet, die bei Temperaturen von 150°C aufschäumen. Gut geeignet sind beispielsweise Mischungen aus Natriumhydrogencarbonat und Zitronensäure, wie sie von der Firma Clariant unter dem Handelsnamen Hydrocerol® vertrieben werden.
Wird Lauryllactam oder Mischungen mit Lauryllactam eingesetzt (Schmelzpunkt 151°C), müssen andere Treibmittel wie 5-Phenyltetrazol oder Azodicarbonamid verwendet werden. Die Einarbeitung der Treibmittel und der anderen Additive erfolgt dann bei Temperaturen oberhalb des Schmelzpunktes der Monomeren.

Anionische Polymerisationsverfahren zur Herstellung von Polyamiden, geeignete Apparate, Monomere und Verfahrensparameter sind dem Fachmann grundsätzlich bekannt. Verfahren zum Einarbeiten von Zusatzstoffen in Thermoplaste sowie dazu geeignete Apparate sind dem Fachmann ebenfalls grundsätzlich bekannt. Geeignete chemische Treibmittel als solche zum Aufschäumen von Thermoplasten sind dem Fachmann ebenfalls bekannt.

Die erfindungsgemäßen Verfahren sind, wie oben erwähnt, zur Herstellung geschäumter faserverstärkter Formteile geeignet. Die Verfahren zur Herstellung von gewebeverstärkten Formteilen sind dem Fachmann grundsätzlich bekannt.

Die Formteile können auch bei einer Temperatur hergestellt werden, bei der noch kein Aufschäumen des chemischen Treibmittels erfolgt (solche schäumbaren Formteile können in späteren Verfahrensschritten bei Temperaturen oberhalb der Zersetzungstemperatur der chemischen Treibmittel und oberhalb der Erweichungstemperatur des Polymeren zu geschäumten Formteilen weiterverarbeitet werden), bevorzugt werden sie aber durch Verarbeitung oberhalb der Zersetzungstemperatur der chemischen Treibmittel direkt als geschäumte und gewebeverstärkte Formteile erhalten.

Geeignete Verwendungen der geschäumten faserverstärkten Formteile sind dem Fachmann bekannt, beispielsweise Strukturbauteile im Fahrzeugbau, Flugzeugbau oder für Windkraftanlagen.

In einer bevorzugten Ausführungsform werden in einem diskontinuierlichen oder auch kontinuierlichen Verfahren die textilen Strukturen bei Temperaturen < 140°C, bevorzugt <120°C und besonders bevorzugt < 100°C unter Feuchtigkeitsausschluss mit aufgeschmolzenem Caprolactam, das die oben beschriebene chemischen Treibmittel sowie andere Additive wie Katalysatoren und Aktivatoren enthält, getränkt und in ein beheiztes Werkzeug eingebracht. Im Werkzeug polymerisiert das Caprolactam unter Aufschäumen bei Temperaturen zwischen 140°C und 280°C, bevorzugt bei Temperaturen zwischen 150°C und 230°C und besonders bevorzugt bei Temperaturen zwischen 160°C und 200°C. Man erhält faserverstärkte Strukturwerkstoffe mit Schaumstoffkernen.

Dieser Verfahrensteil, nämlich das Tränken der textilen Strukturen mit dem oder den Lactamen sowie den Additiven und das Auspolymerisieren des oder der Lactame ohne Aufschäumen des oder der Treibmittel kann auch kontinuierlich durchgeführt werden, beispielsweise in einer Doppelbandpresse.

In einer besonders bevorzugten Ausführungsform werden textile Strukturen mit verschiedener Dichte verwendet, um ausgeprägte Sandwichstrukturen herzustellen. Dazu werden in der Formteilmitte weniger dichte textile Strukturen, beispielsweise unstrukturierte Vliese, verwendet, am Formteilrand hochstrukturierte textile Strukturen, wie beispielsweise unidirektionale Gelege, eingesetzt. Zusammen mit der Schaumstruktur, die durch das Aufschäumen des Polyamids entsteht, ergibt sich eine Sandwichstruktur mit deutlich verringerten Kerndichte und hochsteifen, hochdichten Wandelementen.

Grundsätzlich ist es auch möglich, das Verfahren mit anderen Reaktionsharzen, wie beispielsweise Epoxyharzen, ungesättigten Polyesterharzen oder Polyurethanen durchzuführen. Auch hier wird das Reaktionsharz während des Härtevorgangs im Werkzeug in Gegenwart von textilen Strukturen, die gemäß ihre Dichte geschichtet sein können, aufgeschäumt, um faserverstärkte Sandwichteile zur erhalten.

### Beispiele

Nachfolgend sollen einige Beispiele einige Aspekte der vorliegenden Erfindung verdeutlichen. Keinesfalls sollen diese Beispiele als den Umfang der Erfindung einschränkend angesehen werden.

Brüggolen® C10 ist ein Katalysator für Gusspolyamid, enthaltend 17-19 % Na-Caprolactamat in Caprolactam, mit einem Schmelzpunkt von ca. 68 °C.
Brüggolen® C20 ist ein Aktivator für Gusspolyamid, enthaltend blockiertes Diisocyanat in Caprolactam, mit einem Schmelzpunkt größer 60 °C.
Hydrocerol® 534 (Hersteller Clariant) ist ein chemisches Treibmittel auf Basis von Natruimhydrogencarbonat und Zitronensäure. Die Zersetzung beginnt bei 190°C.

Expandex (5-Phenyltetrazol, Handelsname Expandex 5 PT, Fa. Interorgana Chemiehandel GmbH, Köln) zersetzt sich ab 240°C.

Beispiel (a):
9,3 g trockenes Caprolactam, 0,4 g Katalysator Brüggolen® C10, 0,2 g Aktivator Brüggolen® C20 (beide Firma Brüggemann), sowie 0,1 g des Treibmittels Hydrocerol® 534 (Fa. Clariant) wurden in ein Reagenzglas gegeben, unter trockenem Argon bei 90°C aufgeschmolzen, kurz gerührt und dann auf 200°C aufgeheizt. Während des Aufheizens kam es zur Schaumentwicklung und es entstand ein zylinderförmiges Polyamid 6 Schaumstoffteil. Das geschäumte PA6 hatte eine Dichte von 100 g/l und einen Gehalt an Restmonomeren von 0.6 Gew-%. Der Schmelzpunkt des Polyamid 6 lag bei 220°C.

Beispiel (b):
9,3 g trockenes Caprolactam, 0,4 g Katalysator Brüggolen® C10, 0,2 g Aktivator Brüggolen® C20 (beide Firma Brüggemann), sowie 0,1 g des Treibmittels Hydrocerol® 534 (Fa. Clariant) wurden in ein Reagenzglas gegeben, unter trockenem Argon bei 90°C aufgeschmolzen, kurz gerührt und dann auf 160°C aufgeheizt. Während des Aufheizens kam es kaum zur Schaumentwicklung und es entstand ein zylinderförmiges leicht angeschäumtes Polyamid 6 Formteil. Das kaum geschäumte PA6 hatte eine Dichte von 700 g/l und einen Gehalt an Restmonomeren von 0.8 Gew-%. Der Schmelzpunkt des Polyamid 6 lag bei 220°C.

Vergleichsbeispiel (i):
9,3 g trockenes Caprolactam, 0,4 g Katalysator Brüggolen® C10, 0,2 g Aktivator Brüggolen® C20 (beide Firma Brüggemann), sowie 0,1 g des Treibmittels Hydrocerol® 534 (Fa. Clariant) wurden in ein Reagenzglas gegeben, unter trockenem Argon bei 90°C aufgeschmolzen, kurz gerührt und dann auf 140°C aufgeheizt. Während des Aufheizens kam es kaum zur Schaumentwicklung und es entstand ein zylinderförmiges nicht angeschäumtes Caprolactam/Polyamid 6 Formteil. Das ungeschäumte PA6 hatte eine Dichte von 1100 g/l und einen Gehalt an Restmonomeren von 0.9 Gew-%. Der Schmelzpunkt des Polyamid 6 lag bei 220°C.

Beispiel (c):
9,3 g trockenes Caprolactam, 0,4 g Katalysator Brüggolen® C10, 0,2 g Aktivator Brüggolen® C20 (beide Firma Brüggemann), sowie 0,1 g des Treibmittels Hydrocerol® 534 (Fa. Clariant) wurden in ein Reagenzglas gegeben, unter trockenem Argon bei 90°C aufgeschmolzen, kurz gerührt und dann auf 150°C aufgeheizt. Während des Aufheizens polymerisierte das Caprolactam und es entstand ein zylinderförmiges Polyamid 6 Formteil. Das PA6-Formteil wurde im Reagenzglas ein zweites Mal auf 280°C erhitzt. Dabei schäumte das Formteil auf. Das geschäumte PA6 hatte eine Dichte von 700 g/l und einen Gehalt an Restmonomeren von 1.6 Gew-%.

Beispiel (d):
9,3 g trockenes Caprolactam, 0,4 g Katalysator Brüggolen® C10, 0,2 g Aktivator Brüggolen® C20 (beide Firma Brüggemann), sowie 0,1 g des Treibmittels Hydrocerol® 534 (Fa. Clariant) wurden in ein Reagenzglas gegeben, unter trockenem Argon bei 90°C aufgeschmolzen, kurz gerührt und dann auf 180°C aufgeheizt. Während des Aufheizens kam es kaum zur Schaumentwicklung und es entstand ein zylinderförmiges leicht angeschäumtes Polyamid 6 Formteil. Das leicht angeschäumte PA6-Formteil wurde im Reagenzglas ein zweites Mal auf 280°C erhitzt. Dabei schäumte es weiter auf. Das geschäumte Formteil hatte ein Dichte von 600 g/l und einen Restmonomerengehalt von 1.9 Gew.-%.

Beispiel (e):
9,3 g trockenes Caprolactam, 0,4 g Katalysator Brüggolen® C10, 0,2 g Aktivator Brüggolen® C20 (beide Firma Brüggemann), sowie 0,1 g des Treibmittels 5-Phenyltetrazol (Handelsname Expandex 5 PT, Fa. Interorgana Chemiehandel GmbH, Köln) wurden in ein Reagenzglas gegeben, unter trockenem Argon bei 90°C aufgeschmolzen, kurz gerührt und dann auf 170°C aufgeheizt. Während des Aufheizens kam es nicht zur Schaumentwicklung und es entstand ein zylinderförmiges Polyamid 6 Formteil. Das PA6-Formteil wurde im Reagenzglas ein zweites Mal auf 280°C erhitzt. Dabei schäumte es stark auf. Das geschäumte Formteil hatte ein Dichte von 500 g/l und einen Restmonomerengehalt von 1.5 Gew.-%.

Vergleichsbeispiel (ii):
9,3 g trockenes Caprolactam, 0,4 g Katalysator Brüggolen® C10, 0,2 g Aktivator Brüggolen® C20 (beide Firma Brüggemann), sowie 0,1 g des Treibmittels Hydrocerol® 534 (Fa. Clariant) wurden in ein Reagenzglas gegeben, unter trockenem Argon bei 90°C aufgeschmolzen, kurz gerührt und dann auf 180°C aufgeheizt. Während des Aufheizens kam es zur Schaumentwicklung und es entstand ein zylinderförmiges angeschäumtes Polyamid-6 Formteil. Das Formteil ließ sich in einem zweiten Schritt nicht weiter aufschäumen.

Herstellung des Caprolactamsystems für Vergleichsbeispiel 1 und Vergleichsbeispiel 2 (Versuche ohne Treibmittel)
30 g (265 mmol) ε-Caprolactam wurden unter Stickstoffatmosphäre aufgeschmolzen, bei einer Temperatur von 90°C unter Durchleiten von Stickstoff gerührt. Anschließend wurden 1,8 g (13,25 mmol = 5 Mol-%) Natrium-Caprolactamat (20 Gew.-%-ig in Caprolactam) (als Katalysator) und 0,376 ml (2,42 mmol = 0,9 Mol-%) N-Acetylcaprolactam (als Aktivator) zugesetzt. Das Caprolactamsystem wurde dann in das unten beschrieben Werkzeug eingebracht.

Vergleichsbeispiel 1:
In eine Stahlform der Größe: 200x50x4 mm³, wurden 3 Glasfasermatten (Fa. Interglas Style 92146 (90/10) FK800) eingelegt. 90% der Fasern lagen dabei in Längsrichtung. Dann wurde eine Vliesmatte (Hersteller OCV) mit 3-dimensional wirr angeordneten Glasfasern (keine Vorzugsrichtung) eingelegt. Darauf wurden wieder 3 Glasfasermatten (Fa. Interglas Style 92146 (90/10) FK800) gelegt. Die Faserdichte in der Mitte betrug ungefähr 30 Vol-%, im Randbereich betrug die Faserdichte etwa 65 Vol-%.

Bei einer Formtemperatur von 150 °C wurde dann gravimetrisch und unter Zuhilfenahme eines leichten Vakuums das oben beschriebene Caprolactamsystem eingebracht. Nach 5 Minuten wurde entformt. Das glasfaserverstärkte Teil war von guter Qualität und war gleichmäßig durchtränkt.

Beispiel 2 (Vergleich):
In eine Stahlform der Größe: 200x50x4 mm³, wurden 10 Glasfasermatten (Fa. Interglas Style 92146 (90/10) FK800) eingelegt. 90% der Fasern lagen dabei in Längsrichtung. Die Faserdichte lag bei etwa 65 Vol-%. Bei einer Formtemperatur von 150 °C wurde dann gravimetrisch und
unter Zuhilfenahme eines leichten Vakuums das oben beschriebene Caprolactamsystem eingebracht. Nach 5 Minuten wurde entformt. Das glasfaserverstärkte Teil war von guter Qualität und war gleichmäßig durchtränkt.

Herstellung des Caprolactamsystems für Beispiel 3 und Vergleichsbeispiel 4 (Versuche mit Treibmittel)
30 g (265 mmol) ε-Caprolactam wurden unter Stickstoffatmosphäre aufgeschmolzen, bei einer Temperatur von 90°C unter Durchleiten von Stickstoff gerührt. Anschließend wurden 0,5 g des Treibmittels Hydrocerol® 534 (Fa. Clariant), 1,8 g (13,25 mmol = 5 Mol-%) Natrium-Caprolactamat (20 Gew.-%-ig in Caprolactam) (als Katalysator) und unter Rühren 0,376 ml (2,42 mmol = 0,9 Mol-%) N-Acetylcaprolactam (als Aktivator) zugesetzt. Das Caprolactamsystem wurde dann in das unten beschrieben Werkzeug eingebracht.

### Beispiel 3:

In eine Stahlform der Größe: 200x50x4 mm³, wurden 3 Glasfasermatten (Fa. Interglas Style 92146 (90/10) FK800) eingelegt. 90% der Fasern lagen dabei in Längsrichtung. Dann wurde eine Vliesmatte (Hersteller OCV) mit 3-dimensional wirr angeordneten Glasfasern (keine Vorzugsrichtung) eingelegt. Darauf wurden wieder 3 Glasfasermatten (Fa. Interglas Style 92146 (90/10) FK800) gelegt. Die Faserdichte in der Mitte betrug ungefähr 30 Vol-% im Randbereich betrug die Faserdichte etwa 65 Vol-%.

Bei einer Formtemperatur von 190 °C wurde dann gravimetrisch und unter Zuhilfenahme eines leichten Vakuums das oben beschriebene Caprolactamsystem eingebracht. Nach 5 Minuten wurde entformt. Das glasfaserverstärkte Teil war von guter Qualität und war gleichmäßig durchtränkt.

Beispiel 4 (Vergleich):
In eine Stahlform der Größe: 200x50x4 mm³, wurden 10 Glasfasermatten (Fa. Interglas Style 92146 (90/10) FK800) eingelegt. 90% der Fasern lagen dabei in Längsrichtung. Die Faserdichte lag bei etwa 65 Vol-%. Bei einer Formtemperatur von 190 °C wurde dann gravimetrisch und
unter Zuhilfenahme eines leichten Vakuums das oben beschriebene Caprolactamsystem eingebracht. Nach 5 Minuten wurde entformt. Das glasfaserverstärkte Teil war von guter Qualität und war gleichmäßig durchtränkt.

Herstellung des Caprolactamsystems für Beispiel 5 und Vergleichsbeispiel 6 (schäumfähige, glasfaserverstärkte Teile)
30 g (265 mmol) ε-Caprolactam wurden unter Stickstoffatmosphäre aufgeschmolzen und bei einer Temperatur von 90°C unter Durchleiten von Stickstoff gerührt. Anschließend wurden 0,5 g 5-Phenyltetrazol (Handelsname Expandex 5 PT, Fa. Interorgana Chemiehandel GmbH, Köln), 1,8 g (13,25 mmol = 5 Mol-%) Natrium-Caprolactamat (20 Gew.-%-ig in Caprolactam) (als Katalysator) und 0,376 ml (2,42 mmol = 0,9 Mol-%) N-Acetylcaprolactam (als Aktivator) zugesetzt. Das Caprolactamsystem wurde dann in das unten beschrieben Werkzeug eingebracht.

### Beispiel 5:

In eine Stahlform der Größe: 200x50x4 mm³, wurden 3 Glasfasermatten (Fa. Interglas Style 92146 (90/10) FK800) eingelegt. 90% der Fasern lagen dabei in Längsrichtung. Dann wurde eine Vliesmatte (Hersteller OCV) mit 3-dimensional wirr angeordneten Glasfasern (keine Vorzugsrichtung) eingelegt. Darauf wurden wieder 3 Glasfasermatten (Fa. Interglas Style 92146 (90/10) FK800) gelegt. Die Faserdichte in der Mitte betrug ungefähr 30 Vol-%, im Randbereich betrug die Faserdichte etwa 65 Vol-%.

Bei einer Formtemperatur von 150 °C wurde dann gravimetrisch und unter Zuhilfenahme eines leichten Vakuums das oben beschriebene Caprolactamsystem eingebracht. Nach 5 Minuten wurde entformt. Das glasfaserverstärkte Teil war von guter Qualität und war gleichmäßig durchtränkt.

In einer elektrisch beheizten Presse wurde das glasfaserverstärkte Teil auf 280°C erhitzt, während die Presse etwa 1 mm auffuhr. Die Stärke des Teils betrug ca. 5 mm.

Beispiel 6 (Vergleich):
In eine Stahlform der Größe: 200x50x4 mm³ wurden 10 Glasfasermatten (Fa. Interglas Style 92146 (90/10) FK800) eingelegt. Die 90% der Fasern lagen dabei in Längsrichtung. Die Faserdichte lag bei etwa 65 Vol-%.

Bei einer Formtemperatur von 150 °C wurde dann gravimetrisch und unter Zuhilfenahme eines leichten Vakuums das oben beschriebene Caprolactamsystem eingebracht. Nach 5 Minuten wurde entformt.

Das glasfaserverstärkte Teil war von guter Qualität und war gleichmäßig durchtränkt. In einer elektrisch beheizten Presse wurde das glasfaserverstärkte Teil auf 280°C erhitzt, während die Presse etwa 1 mm auffuhr. Die Stärke des Teils betrug ca. 5 mm.

| Beispiel | Vlieskern | geschäumt | schaumfähig | Dichte | Oberfläche | Steifigkeit |
|---|---|---|---|---|---|---|
| | | | | g/cm³ | | |
| 1 | ja | nein | nein | 1,7 | 3 | 3 |
| 2 | nein | nein | nein | 2,1 | 3-4 | 3 |
| 3 | ja | ja | | 1,6 | 1-2 | 3-4 |
| 4 | nein | ja | | 1,9 | 2-3 | 3-4 |
| 5 | ja | | ja | 1,8* | 2 | 2 |
| 6 | nein | | ja | 1,9* | 2 | 2 |

| | | | | | | |
|---|---|---|---|---|---|---|
| * Dichte nach dem Aufschäumen in der beheizten Presse 1 = sehr gut, sehr hoch 2 = gut, hoch 3 = mittel 4 = mäßig | | | | | | |

Vergleichs-Versuch 1 mit dem Vergleichsversuch 2 zeigt, dass durch Verwendung von leichterem Vlies in der Kernschicht, bei ungefähr konstanten mechanischen Eigenschaften, die Dichte, oder anders ausgedrückt das Gewicht des Teils bereits deutlich verringert wird. Das ist besonders für faserverstärkte Teile, die im Luftfahrtbereich oder Verkehrswesen eingesetzt werden, von Bedeutung.

Die Versuche 3 und 4 zeigen zudem, dass durch Aufschäumen das Gewicht des Teiles weiter verringert wird, und auch hier zeigt sich, dass durch eine Schichtung der textilen Strukturen (Versuch 3) leichtere Teile mit ungefähr gleichen Eigenschaften wie Teile ohne leichtere Vliesstrukturen im Kernbereich (Versuch 4) hergestellt werden können.

Das gleich gilt natürlich auch für Teile, die erst in einem zweiten Verfahrenschritt aufgeschäumt werden (Versuche 5 und 6).

## Patentansprüche

1. Verfahren zur Herstellung eines Polyamids durch anionische Polymerisation mindestens eines Lactams, wobei in das mindestens eine geschmolzene Lactam ein oder mehrere chemische Treibmittel, wahlweise zusammen mit mindestens einem weiteren Additiv, eingearbeitet werden, und dann das mindestens eine Lactam anionisch polymerisiert wird, wobei die Polymerisationstemperatur unter dem Schmelzpunkt des entstehenden Polyamids liegt, und wobei das entstehende Polyamid mit Fasern verstärkt ist, und wobei während der anionischen Polymerisation des mindestens einen Lactams Fasern und/oder textile Strukturen vorhanden sind.

2. Verfahren zur Herstellung eines Polyamids gemäß Anspruch 1, wobei mindestens eines der Lactame ausgewählt ist aus der Gruppe enthaltend Caprolactam und Lauryllactam.

3. Verfahren zur Herstellung eines Polyamids gemäß Anspruch 1 oder 2, wobei die Polymerisationstemperatur über der jeweiligen Zersetzungstemperatur jedes der eingesetzten chemischen Treibmittel liegt.

4. Verfahren zur Herstellung eines Polyamids gemäß Anspruch 3, wobei das entstehende Polyamid ein Schaum ist.

5. Verfahren zur Herstellung eines Polyamids gemäß Anspruch 3 oder 4, wobei die Additive bei Temperaturen < 140°C eingearbeitet werden und wobei die anschließende Polymerisation mit dem Aufschäumen bei Temperaturen > 140°C stattfindet.

6. Geschäumtes Polyamid, herstellbar gemäß einem der Ansprüche 1 bis 5.

7. Verwendung des geschäumten Polyamids gemäß Anspruch 6 als Halbzeug zur Herstellung geschäumter oder schäumbarer Formteile.

8. Verfahren zur Herstellung eines Polyamids gemäß Anspruch 1 oder 2, wobei die Polymerisationstemperatur unter der jeweiligen Zersetzungstemperatur jedes der eingesetzten chemischen Treibmittel liegt.

9. Verfahren zur Herstellung eines Polyamids gemäß Anspruch 8, wobei das entstehende Polyamid schäumbar ist.

10. Verfahren zur Herstellung eines Polyamids gemäß Anspruch 8 oder 9, wobei die Additive bei Temperaturen < 140°C eingearbeitet werden, und wobei die anschließende Polymerisation bei Temperaturen zwischen 130°C und 170°C stattfindet.

11. Schäumbares Polyamid, herstellbar gemäß einem der Ansprüche 8 bis 10.

12. Verwendung des schäumbaren Polyamids gemäß Anspruch 11 zur Herstellung geschäumter oder schäumbarer Formteile.

13. Verwendung gemäß Anspruch 12, wobei die hergestellten Formteile bei Temperaturen oberhalb des Schmelzpunktes des Polyamids aufgeschäumt werden.

14. Verfahren zur Herstellung faserverstärkter Formteile, wobei die gemäß Anspruch 1 herstellbaren faserverstärkten Polyamide bei Temperaturen oberhalb ihres Schmelzpunkts weiter verarbeitet werden.

15. Verfahren zur Herstellung faserverstärkter Formteile gemäß Anspruch 14, wobei die Faserverstärkung eine Sandwichstruktur aufweist und im Inneren des Formteils weniger dichte Faserstrukturen als im Außenbereich des Formteils verwendet werden.

16. Faserverstärkte geschäumte Formteile, herstellbar gemäß Anspruch 14 oder 15, deren Faserstruktur einen Dichtegradienten

17. Verwendung der gemäß Anspruch 1 herstellbaren faserverstärkten Polyamide zur Herstellung von geschäumten sandwichartigen faserverstärkten Bauteilen.
